# EUROPÄISCHE PATENTSCHRIFT

(11) **EP 0 567 915 B1**
(45) Veröffentlichungstag und Bekanntmachung des Hinweises auf die Patenterteilung: **21.02.1996**
(21) Anmeldenummer: 93106447.1
(22) Anmeldetag: 21.04.1993
(51) Int. Cl.: B05B 15/12, B01D 61/14

(54) **Verfahren zur Rückgewinnung des Oversprays von wässrigen Überzugsmitteln beim Spritzauftrag in Spritzkabinen**
Process for recovering water-coating overspray during spray coating in spray booths
Procédé pour récupérer l'excédent d'une composition de revêtement aqueuse lors de l'application par pulvérisation dans des cabines de peinture

(30) Priorität: 25.04.1992 DE 4213671
(43) Veröffentlichungstag der Anmeldung: 03.11.1993
(73) Patentinhaber: Herberts Gesellschaft mit beschränkter Haftung, D-42285 Wuppertal (DE)
(72) Erfinder: Saatweber, Dietrich, Dr., W-5600 Wuppertal 21 (DE); Krumm, Waltraud, W-5830 Schwelm (DE); Richter, Bernhard, W-5600 Wuppertal 2 (DE); Holfter, Dirk, W-5800 Hagen 1 (DE)
(74) Vertreter: Türk, Gille, Hrabal, Leifert

(56) Entgegenhaltungen:
- EP-A- 0 536 648
- DE-A- 2 353 469
- DE-A- 2 510 309
- DE-A- 2 945 523
- DE-A- 3 428 300
- US-A- 4 818 388

## Beschreibung

Die Erfindung betrifft ein Verfahren zur Rückgewinnung des Oversprays von wäßrigen überzugsmitteln beim Spritzauftrag in Spritzkabinen, bei dem das Overspray in das in der Spritzkabine verwendete wäßrige überzugsmittel rezyklisiert werden kann.

Die Substitution von Lacken, die mit organischen Lösemitteln verdünnt werden, durch wasserverdünnbare Systeme, wird aus den bekannten Gründen der Umweltschonung immer wichtiger. Durch den Einsatz wasserverdünnbarer Systems wird die Luft weniger oder gar nicht mehr durch Lösemittelemissionen verunreinigt. Ein genereller Schwachpunkt bei der Verarbeitung von überzugsmitteln, wie wasserverdünnbaren Lacken, durch Spritzapplikation sind jedoch Probleme, die sich bei der Entsorgung des Oversprays (Lacknebel) ergeben; diese Probleme treten insbesondere bei großformatigen Serienlackierungen, wie in der Autoindustrie, auf.

Es ist bekannt, die Abluft von Spritzkabinen zur Entsorgung des Oversprays durch Auswaschen mit Wasser zu reinigen. Beispielsweise wird in der DE-A-29 45 523 ein Verfahren beschrieben, bei dem das Overspray von konventionellen lösemittelverdünnbaren Lacken mit Wasser ausgewaschen wird, worauf das Waschwasser einer Ultrafiltration unterzogen wird.

In der DE-A-32 27 227 wird ein ähnliches System zur Entsorgung des beim Lackieren mit Wasserlacken anfallenden Oversprays beschrieben. Das Overspray wird an mit Wasser berieselten Wandungen der Spritzkabine absorbiert und das im Kreislauf geführt Berieselungswasser wird über ein Ultrafilter aufbereitet. Es hat sich jedoch gezeigt, daß das im Berieselungswasser aufgefangene Overspray nicht mehr zur weiteren Verwendung in Beschichtungsmitteln brauchbar ist, so daß es entsorgt werden muß. Es wird zwar aus der Abwasserreinigung und insbesondere bei der Entfernung von unerwünschten niedrigmolekularen Stoffen bei Elektrotauchlackierverfahren die Ultrafiltration angewendet und dadurch eine Verbesserung des Nutzungsgrades durch Recycling erzielt (DE-C-21 58 668, DE-B-22 29 677, EP-A-0 127 685, EP-A-0 137 877, US-A-3,663,405 und US-A-3,663,406), jedoch ergeben sich bei der Anwendung der Ultrafiltration für das Recycling von Overspray Probleme. Während nämlich die Ultrafiltration von Elektrotauchlacken die Rückführung des Permeats und des Retentats in das Badmaterial ermöglichte, ergeben sich für das Recycling von Overspray aus Wasserlacken durch die unterschiedliche Applikationsart (Spritzen statt Elektrotauchen) und die dadurch bedingten höheren Viskositätsunterschiede Stabilitätsprobleme, wie die Gefahr der Koagulation, Sedimentation, Phasentrennung und Bildung von Ausfällungen. In der DE-A-34 28 300 wird zur Vermeidung der beim Verfahren der DE-A-32 27 227 auftretenden Stabilitätsprobleme empfohlen, die Berieselung der Spritzkabine mit entsalztem Wasser durchzuführen. Es hat sich jedoch gezeigt, daß auch der Einsatz von entsalztem Wasser als Berieselungsflüssigkeit nicht dazu geeignet ist, die Stabilitätsprobleme des absorbierten Oversprays derart auszuräumen, daß eine Eignung zur Wiederverwendung im Lackmaterial erzielt wird. In der WO-A-91/09666 wird versucht, die gemäß dem Verfahren der DE-A-32 27 227 auftretenden Stabilitätsprobleme dadurch zu lösen, daß die Berieselung der Spritzkabine mit Wasser erfolgt, dem ein Mittel zur Verhinderung der Koaleszenz beigegeben wird. Hierbei handelt es sich um Amine. Hierdurch werden einerseits umweltbelastende Stoffe zugesetzt und andererseits wird die Lackzusammensetzung durch Zusatz von Chemikalien verändert.

Die Aufkonzentration von in Wasser aufgenommenem Overspray durch Ultrafiltration von niedrigen auf höhere Konzentrationen führt darüber hinaus zu starken Veränderungen der wäßrigen überzugsmittel, weil durch die Ultrafiltration bevorzugt wasserlösliche und niedermolekulare Bestandteile wie Löse- und Neutralisationsmittel entzogen werden, die zur Stabilisierung der wäßrigen Lackdispersionen und zu ihren lacktechnischen Eigenschaften wesentlich beitragen.

Dirk Saarbach und Georg Schlumpf beschreiben in Oberfläche + JOT 1991, Heft 3, S. 18 bis 20, "Die Naßlackierung ohne Emissionen oder Sondermüll" die Lackierung von Büromöbeln mit einem Wasserlackrecycling, wobei auch ein kontinuierlicher Kreislauf beschrieben wird. Es wird erwähnt, daß die Teilsysteme "Wasserverdünnbarer Einbrennlack", "Ultrafiltrationstechnik" und "Spritzanlage" aufeinander abgestimmt sein müssen. Auch wird die Zugabe von Additiven zum Recyclingprozeß beschrieben. Es wird jedoch kein Hinweis gegeben, wie ein Ablauf ohne Stabilitätsprobleme erreicht wird; darüber hinaus wird die Zusammensetzung des Originallackes durch die Zugabe dar Additive verändert.

Für dieses Verfahren sind nur Lacke geeignet, die bei der Aufkonzentration durch Ultrafiltration von niedrigen auf hohe Konzentrationen nicht koagulieren oder andere Instabilitätserscheinungen zeigen, die die lacktechnischen Eigenschaften verändern.

Aufgabe der vorliegenden Erfindung ist daher die Bereitstellung eines Verfahrens zur Rückgewinnung des Oversprays von wäßrigen überzugsmitteln, das eine Wiederverwertung des Oversprays in wäßrigen überzugsmittel ermöglicht und durch das Stabilitätsprobleme vermieden werden, und das den Einsatz hochqualitativer und daher meist empfindlicher wäßriger überzugsmittel, wie beispielsweise wäßriger Autolacke, im Praxismaßstab ermöglicht.

Es hat sich gezeigt, daß diese Aufgabe gelöst werden kann durch ein Verfahren zur Rückgewinnung des Oversprays von wäßrigen überzugsmitteln beim Spritzauftrag in Spritzkabinen, bei dem das Overspray in einer wäßrigen Auswaschflüssigkeit aufgefangen wird, die kontinuierlich in einem Kreislauf A in die Spritzkabine zurückgeführt wird, wobei ein Teil der Overspray enthaltenden Auswaschflüssigkeit aus dem Kreislauf A einem Ultrafiltrationskreislauf B zugeführt wird und wobei im Ultrafiltrationskreislauf B Permeat entzogen und zur Ergänzung der Auswaschflüssigkeit in den Kreislauf A zurückgeführt wird, das dadurch gekennzeichnet ist, daß das Verfahren kontinuierlich durchgeführt wird, daß die Auswaschflüssigkeit im Kreislauf (A) bei einem annähernd konstanten Festkörpergehalt im Bereich von 1-1,5 Gew.% gehalten wird, daß die im Ultrafiltrationskreislauf (B) umlaufende Flüssigkeit durch Entzug von Permeat bei einem annähernd konstanten Festkörpergehalt im Bereich von 8-15 Gew.% gehalten wird, wobei ein Teil der umlaufenden Flüssigkeit aus dem Ultrafiltrationskreislauf (B) einem weiteren Ultrafiltrationskreislauf (C) zugeführt wird, in dem die umlaufende Flüssigkeit durch Entzug von Permeat bei einem annähernd konstanten Festkörpergehalt im Bereich von 35 Gew.% bis zu dem Festkörpergehalt, der sich bei Spritzviskosität des wäßrigen überzugsmittels ergibt, gehalten wird, wobei das Permeat aus dem Kreislauf (C) ebenfalls zur Ergänzung der Auswaschflüssigkeit in den Kreislauf (A) zurückgeführt wird und zumindest ein Teil der im Ultrafiltrationskreislauf (C) umlaufenden Flüssigkeit als wäßriges überzugsmittel zum Spritzauftrag in der Spritzkabine oder zu dessen Aufbereitung verwendet wird.

Beim erfindungsgemäßen Verfahren wird zu Beginn als Auswaschflüssigkeit im Kreislauf A beispielsweise Wasser, z. B. entsalztes Wasser eingesetzt, das übliche Mengen an Entschäumer enthalten kann. Es kann auch Permeat oder das zum Spritzauftrag verwendete wäßrige Überzugsmittel eingesetzt werden, das mit entsalztem Wasser auf den gewünschten Festkörpergehalt verdünnt wurde. Im Verlauf des Verfahrens wird die Auswaschflüssigkeit durch das Ultrafiltrat (Permeat) aus den Ultrafiltrationskreisläufen B und C ersetzt bzw. teilweise ersetzt. Wenn die Permeate aus den Kreisläufen B und C nicht ausreichen, so kann mit entsalztem Wasser oder verdünntem Überzugsmittel ergänzt werden.

Beim erfindungsgemäßen Verfahren erfolgt ein kontinuierliches Recycling in mehreren Kreisläufen. Im Kreislauf A, welcher das Kabinenumlaufsystem darstellt, nimmt die Auswaschflüssigkeit Overspray auf und wird kontinuierlich dem Kreislauf B, einem Ultrafiltrationskreislauf, zugeführt. Gleichzeitig nimmt der Kreislauf A kontinuierlich wäßriges Permeat aus den Kreisläufen B und C auf. Durch das Verhältnis der Aufnahmemenge von Overspray zur Abgabemenge an den Kreislauf B kann der Festkörpergehalt im Kreislauf A annähernd konstant bei einem Wert von 1 bis 1,5 Gew.%, vorzugsweise von 1,5 Gew.% gehalten werden.

Im Ultrafiltrationskreislauf B wird die mit Overspray angereicherte Auswaschflüssigkeit einer Ultrafiltration unterzogen, wobei einerseits wäßriges Permeat an den Kreislauf A zurückgeführt wird und andererseits das im Schoße des Ultrafiltrationskreislaufs B aufkonzentrierte Overspray einem weiteren Ultrafiltrationskreislauf C zugeführt wird. Im Kreislauf B wird der Festkörpergehalt der mit Overspray angereicherten Auswaschflüssigkeit auf 8 bis 15 Gew.%, bevorzugt etwa 10 Gew.% aufkonzentriert; die im Kreislauf B geführte Flüssigkeit wird bevorzugt bei einem konstanten Wert aus diesem Bereich gehalten. Das Permeat aus dem Kreislauf B, das einen Festkörpergehalt in der Größenordnung bis zu 1 Gew.% aufweisen kann, wird zur Auffüllung der Auswaschflüssigkeit in dem Kreislauf A zurückgeführt.

Das im Kreislauf B erhaltende Retentat wird einem weiteren Ultrafiltrationskreislauf C zugeführt. Es wird beispielsweise in einer Teilmenge aus dem Kreislauf B abgezogen, die der Zufuhr von mit Overspray angereicherter Auswaschflüssigkeit aus dem Kreislauf A entspricht.

Im Ultrafiltrationskreislauf C wird das aus dem Kreislauf B abgezogene Retentat einer weiteren Ultrafiltration unterworfen. Dabei wird so gearbeitet, daß die in dem Ultrafiltrationskreislauf C umlaufende Flüssigkeit auf einem Festkörpergehalt gehalten wird, der bei 35 Gew.% bis zu dem Festkörpergehalt liegt, der sich bei Spritzviskosität des eingesetzten überzugsmittels ergibt. Bevorzugt wird der Festkörpergehalt im Kreislauf C bei mindestens 40 bis 45 Gew.% gehalten. Der Festkörpergehalt im Kreislauf C wird bevorzugt bei einem konstanten Wert gehalten.

Das im Kreislauf C erhaltene wäßrige Permeat kann wieder dem Kreislauf A zugeführt werden. Es kann beispielsweise einen Festkörpergehalt in der Größenordnung bis zu 1 Gew.% aufweisen.

Die vorstehend für den Kreislauf A, den Kreislauf B und den Kreislauf C angegebenen Gewichtsprozente beziehen sich jeweils auf das Gesamtgewicht des im Kreislauf geführten wäßrigen Systems.

Bei der im Ultrafiltrationskreislauf C umlaufenden Flüssigkeit handelt es sich entweder um das zum Spritzauftrag verwendete wäßrige überzugsmittel im spritzfertigen Zustand, oder in einer mit Wasser verdünnten Form. Die im Ultrafiltrationskreislauf C umlaufende Flüssigkeit kann somit entweder direkt den Spritzaggregaten in der Spritzkabine zugeführt werden, oder nach einer Aufbereitung. Zur Aufbereitung kann gemäß einer bevorzugten Ausführungsform ein Teil der im Ultrafiltrationskreislauf C umlaufenden Flüssigkeit mit frischem Nachfüllkonzentrat des wäßrigen überzugsmittels und gegebenenfalls Wasser und/oder gegebenenfalls anderen überzugsmittelbestandteilen vermischt werden. Das Vermischen kann gegebenenfalls in einer eigenen Mischvorrichtung erfolgen. Gemäß einer weiteren bevorzugten Ausführungsform können das Nachfüllkonzentrat und gegebenenfalls Wasser und/oder gegebenenfalls andere überzugsmittelbestandteile, gegebenenfalls über eine Mischvorrichtung, in die im Ultrafiltrationskreislauf C umlaufende Flüssigkeit dosiert werden, wodurch es möglich wird, die Spritzaggregate direkt mit der im Ultrafiltrationskreislauf C umlaufenden Flüssigkeit zu versorgen.

Das Nachfüllkonzentrat für das wäßrige überzugsmittel wird mit Kreislaufflüssigkeit C auf Spritzviskosität gemischt und zur Spritzapplikation geleitet.

Durch die erfindungsgemäße Verfahrensführung, die Abstimmung der Kreisläufe A, B und C werden Stabilitätsprobleme, wie sie sich beim Stand der Technik ergaben, vermieden. Das erfindungsgemäße Verfahren ermöglicht somit eine direkte Wiederverwendung des Oversprays wäßriger überzugsmittel auch dann, wenn diese bei der Aufkonzentration durch Ultrafiltration zur Instabilität neigen oder ihre lacktechnischen Eigenschaften (z. B. das Viskositätsverhalten) verändern, wie dies insbesondere bei qualitativ hochwertigen Lacken für die Autoserienlackierung beobachtet wird.

Eine zusätzliche Menge an Leitungswasser oder vollentsalztem Wasser für die Berieselung der Spritzkabinenwände, wie sie im Stand der Technik notwendig war, die zu Stabilitätsproblemen des aufgefangenen Oversprays führte, wird durch das erfindungsgemäße Verfahren weitgehend vermieden. Die Kabinenwände werden für eine optimale Aufnahme des Oversprays mit verdünntem wäßrigem überzugsmittel in Form von Permeat berieselt. Lediglich im Verfahren, beispielsweise durch Verdunstung, entzogenes Wasser wird durch entsalztes Wasser ersetzt.

Der Vorteil des erfindungsgemäßen Verfahrens liegt in der Erhaltung der Zusammensetzung und des Gleichgewichtes in den Kreisläufen, wodurch gravierende Veränderungen in der Zusammensetzung des wäßrigen überzugsmittels vermieden werden. Dadurch werden Störfaktoren, die zur Instabilität führen, verhindert und es ergibt sich die Möglichkeit eines nahezu 100 %igen Recyclings von Overspray ohne großen Korrekturaufwand und mit geringem analytischem Aufwand.

Im Gegensatz zu den bekannten Verfahren ist es möglich, die Recyclingkreisläufe durchzuführen, ohne diesen praktisch Additive zuzusetzen. Dadurch wird gewährleistet, daß keine nachträglich zugegebenen Additive die Eigenschaften des wäßrigen überzugsmittels verändern und gegebenenfalls verschlechtern. Alle notwendigen Additive, wie z. B. Antischaummittel, Additive zur Vermeidung von Oberflächenstörungen, Verlaufsadditive können beispielsweise in das Lacknachfüllkonzentrat eingearbeitet werden. Die zweistufige Ultrafiltration in den Kreisläufen B und C weist gegenüber einer einstufigen Ultrafiltration in einem einzigen Kreislauf B den Vorteil auf, daß im Kabinenkreislauf A geringe Festkörperkonzentrationen der Auswaschflüssigkeit möglich sind, wodurch Feststoff-Austräge aus der Spritzkabine A bei der erforderlichen Trennung von Kabinenumluft und Umlaufflüssigkeit weiter verringert werden können.

Die Einstellung der Gleichgewichte läßt sich einfach mit üblichen Apparaturen durchführen. Sie kann beispielsweise über das Verhältnis der abgegebenen Menge zur aufgenommenen Menge in den jeweiligen Kreisläufen, die Fläche und Leistungsfähigkeit der Ultrafiltrationsmembranen, die Konzentration des Nachfüllkonzentrats für wäßrige überzugsmittel und den Durchsatz des wäßrigen überzugsmittels in der Spritzkabine gesteuert werden. Solche Parameter können vom Fachmann leicht durch Versuch und Berechnung ermittelt werden.
Das erfindungsgemäße Verfahren kann mit üblichen Vorrichtungen durchgeführt werden, so daß es keiner speziellen Umstellung bereits vorhandener Einrichtungen bedarf.

Die erfindungsgemäß eingesetzten Spritzkabinen sind übliche Spritzkabinen. Sie können mit üblichem Zuluft- und Abluft-Kreislauf betrieben werden. Die einsetzbaren Spritzkabinen können beispielsweise mit mindestens einer Naßrieselwand oder mit einer Venturi-Auswaschung, wie sie insbesondere bei der Kraftfahrzeuglackierung üblich ist, ausgestattet sein. Im Falle von Naßrieselwänden können auch sämtliche Wandungen als Naßrieselwände ausgebildet sein. Sind Naßrieselwände vorhanden, so dient die Auswaschflüssigkeit als Berieselungsflüssigkeit. Die Auswaschflüssigkeit kann beispielsweise am Boden der Spritzkabine gesammelt und im Kreislauf zur erneuten Berieselung der Naßrieselwände oder zur erneuten Venturi-Auswaschung zurückgeführt werden. Derartige Spritzkabinen sind dem Fachmann geläufig. In ihnen erfolgt der Kabinenkreislauf, Kreislauf A.

Im Kreislauf B und im Kreislauf C werden übliche Ultrafiltrationseinheiten eingesetzt. Die wäßrige Flüssigkeit im Kreislauf B und C wird durch die Ultrafiltrationseinheit zyklisiert, beispielsweise über einen Behälter für das Ultrafiltrations-Retentat (das hier auch als Konzentrat bezeichnet wird), der beheizbar oder kühlbar sein kann. Aus diesem Behälter wird das Ultrafiltrations-Retentat zur Ultrafiltrationseinheit zurückgeführt. Der Ultrafiltrationseinheit kann ein Vorfilter zur Entfernung gröberer Verunreinigungen vorgeschaltet werden. Aus dem Kreislauf A abgezweigtes mit Overspray angereicherte wäßrige Auswaschflüssigkeit wird dem Kreislauf B zugeführt, beispielsweise in den Behälter für Ultrafiltrationskonzentrat. In gleicher Weise kann aus dem Kreislauf B abgezweigte umlaufende Flüssigkeit dem Kreislauf C zugeführt werden, der ebenfalls einen Behälter für Ultrafiltrationskonzentrat, wie für den Kreislauf B beschrieben, aufweisen kann. Das wäßrige Permeat aus den Kreisläufen B und C kann aus den Filtrationseinheiten direkt in den Kreislauf A zurückgeführt werden, beispielsweise in den Boden der Spritzkabine, der wannenförmig ausgebildet sein kann. Das wäßrige Permeat kann ganz oder teilweise, gegebenenfalls durch ein Hyperfiltrationsaggregat, geführt werden. In dem Hyperfiltrationsaggregat erfolgt eine umgekehrte Osmose, durch die dem wäßrigen Permeat niedermolekulare Bestandteile entzogen werden. Diese können in den Kreislauf B bzw.. den Kreislauf C beispielsweise in den Behälter für das Ultrafiltrationskonzentrat, zurückgeführt werden. Das aus dem Hyperfiltrationsaggregat austretende Wasser wird wieder dem Kreislauf A, beispielsweise in den Boden der Spritzkabine, zurückgeführt.

Die Ultrafiltration, die umgekehrte Osmose bzw. die Hyperfiltration sind dem Fachmann bekannt. Sie können mit üblichen Einheiten durchgeführt werden. Diese Filterverfahren werden sowohl in den in der Beschreibungseinleitung genannten Patentanmeldungen und Patentschriften beschrieben, als auch beispielsweise von Wilhelm R. A. Auck und Herrmann A. Müller, in "Grundoperationen chemischer Verfahrenstechnik", Verlag Chemie, 1982, S. 153-155, von Robert Rautenbach und Rainer Albrecht, in "Grundlagen der chemischen Technik, Membrantrennverfahren, Ultrafiltration und Umkehrosmose", Otto Salle Verlag und Verlag Sauerländer, 1981, und von Thomas D. Brock, in "Membrane Filtration", Springer Verlag, 1983.

Für das erfindungsgemäße Verfahren werden bei der Ultrafiltration keine hohen Drücke benötigt. Als Mindestdruck ist ein Druck erforderlich, mit dem Wasser und niedrigmolekulare Substanz in meßbarer Geschwindigkeit durch die Membrane gepreßt werden. Derartige Drücke liegen beispielsweise bei 0,7 bis 11 bar, vorzugsweise in der Größenordnung von 5 bar.

Der Druck für die umgekehrte Osmose ist definitionsgemäß größer als der osmotische Druck. Es gibt keine scharfe Abgrenzung zwischen Ultrafiltration und umgekehrter Osmose oder Hyperfiltration. Für das erfindungsgemäße Verfahren wird unter umgekehrter Osmose oder Hyperfiltration beispielsweise die Filtration verstanden, bei der niedrigmolekulare Anteile des Permeats möglichst weitgehend vom Wasser getrennt werden.

Durch den beim erfindungsgemäßen Verfahren möglichen Einsatz von Hyperfiltrationsaggregaten ergibt sich der zusätzliche Vorteil der Erfassung solcher wasserlöslicher Komponenten in das Recycling, die bei der Ultrafiltration teilweise oder völlig in das Permeat gelangen, wie wasserlösliche Kunstharze, z. B. Polyvinylalkohol, spezielle wasserlösliche Melaminharze, z. B. Cymel 327, der wasserlösliche Anteil organischer Lösemittel oder niedrigmolekulare Verbindungen, wie sie beispielsweise in dem Bericht von Dietrich Saatweber, in "Untersuchungen zum Einfluß der Ultrafiltration auf die Eigenschaften von Elektrotauchlacken", VII, FAITPEC KONGRESS, Kongress-Buch S. 467-474 beschrieben werden. Eventuelle Änderungen in den Massenverhältnissen der nicht ins Permeat gelangenden Komponenten und der ins Permeat gelangenden Komponenten, z. B. bei unbeabsichtigtem Verlust von Ultrafiltrat, können gegebenenfalls durch geeignete Rezeptur des Nachfüllkonzentrats für die wäßrigen überzugsmittel ausgeglichen werden. Gegebenenfalls können aber auch dem Permeat, wie vorstehend beschrieben, die Komponenten durch umgekehrte Osmose bzw. Hyperfiltration entzogen werden und direkt in den Kreislauf B bzw. den Kreislauf C zurückfließen.

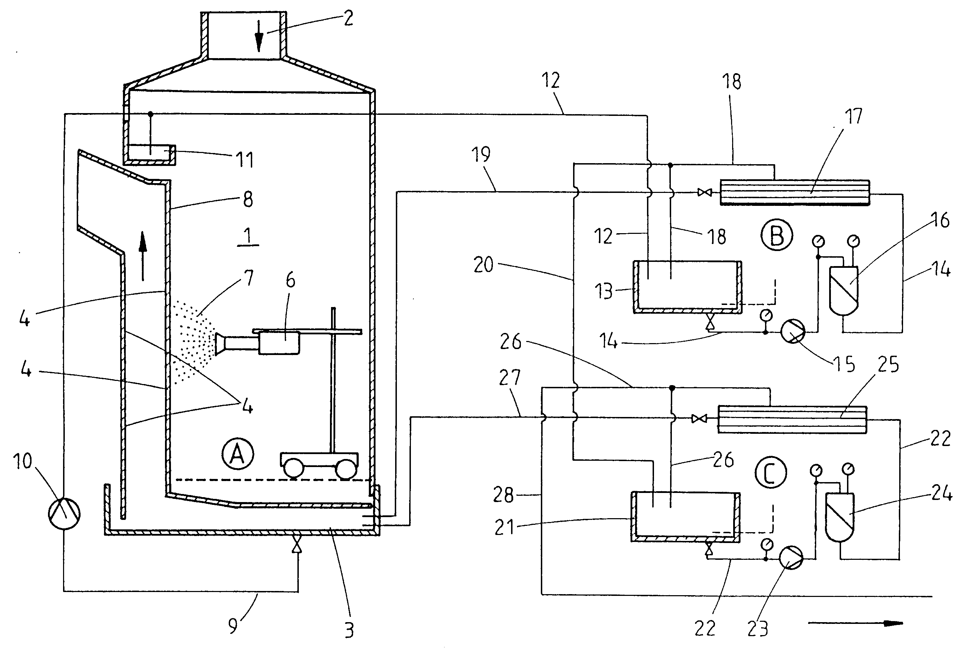

Die beigefügte Figur stellt ein Fließschema dar, welches das erfindungsgemäße Verfahren bzw. die erfindungsgemäß einsetzbare Vorrichtung anhand eines Beispiels erläutert, wobei dieses Beispiel eine bevorzugte Ausführungsform des erfindungsgemäßen Verfahrens darstellt.

In der Figur wird eine übliche Spritzkabine 1 dargestellt, die über einen Zuluftkanal 2 von oben her mit Luft gespeist werden kann, welche am Boden 3 der Spritzkabine in einen mit Prallwänden 4 versehenen Abluftkanal 5 eingeführt werden kann.

Das beim Spritzen mit dem Spritzaggregat 6 anfallende Overspray 7 (Spritznebel) wird an der Naßrieselwand 8 aufgefangen. Die an der Naßrieselwand 8 nach unten abfließende Berieselungsflüssigkeit wird im wannenförmig ausgebildeten Boden 3 der Spritzkabine aufgefangen und von dort über die Leitung 9, mittels einer Pumpe 10 und einem überlauf 11 dem oberen Ende der Naßrieselwand 8 wieder zugeführt.

Der Kabinenkreislauf, Kreislauf A, wird somit durch die Naßrieselwand 8, den Boden 3 der Spritzkabine, die Leitung 9 mit Pumpe 10 und den überlauf 11 gebildet. Als Berieselungsflüssigkeit dient das Permeat der Kreisläufe B und C, das bei einem Festkörpergehalt, der bei einem annähernd konstanten Wert im Bereich von 1 bis 1,5 Gew.% liegt, gehalten wird.

Von der in der Figur dargestellten Leitung 9 zweigt eine Leitung 12 ab, die z. B. über eine nicht dargestellte Steuerungseinrichtung zu einem Behälter 13 führt, der zur Aufnahme von Ultrafiltrations-Retentat bestimmt ist. Der Behälter 13 kann mit Künleinrichtungen und Heizeinrichtungen versehen sein, um die gewünschten Arbeitstemperaturen einzustellen. Die aus der Leitung 12 mit Overspray angereicherte Berieselungsflüssigkeit wird mit der im Behälter 13 enthaltenen Kreislaufflüssigkeit vermischt.

Aus dem Behälter 13 wird das Ultrafiltrations-Retentat zusammen mit der aus dem Kreislauf A eingeführten Flüssigkeit über die Leitung 14, mittels einer Pumpe 15 und über ein gegebenenfalls zuschaltbares Vorfilter 16 einer Ultrafiltrationseinheit 17 zugeführt. In der Ultrafiltrationseinheit 17 wird laufend Permeat entzogen. Das Retentat wird über die Leitung 18 zurück in den Behälter 13 geführt.

Erfindungsgemäß wird ein Ultrafiltrationskreislauf, Kreislauf B, durch den Behälter 13, die Leitung 14, mit Pumpe 15 und gegebenenfalls zuschaltbarem Vorfilter 16, die Ultrafiltrationseinheit 17 und die Leitung 18 gebildet. Beim erfindungsgemäßen Verfahren werden der Kreislauf B in Kombination mit einer Steuerung, die die Zufuhr von mit Overspray angereicherter Berieselungsflüssigkeit aus dem Kreislauf A regelt, so gesteuert, daß die umlaufende Flüssigkeit im Kreislauf B bei einem Festkörpergehalt gehalten wird, der bei einem annähernd konstanten Wert im Bereich von 8 bis 15 Gew.% liegt.

Aus der Ultrafiltrationseinheit 17 erhaltenes Permeat wird über die Leitung 19 abgezogen und über den Boden 3 der Spritzkabine 1 in den Kreislauf A zurückgeführt.

Von der Leitung 18 zweigt eine Leitung 20 ab, durch die im Kreislauf umlaufende Flüssigkeit des Kreislaufs B (Retentat) in einen weiteren Ultrafiltrationskreislauf C eingeführt werden kann. Beispielsweise kann die Leitung 20 über eine (nicht dargestellte) Steuereinrichtung zu einem Behälter 21 führen, der zur Aufnahme von Ultrafiltrations-Retentat bestimmt ist. Der Behälter 21 kann mit Kühleinrichtungen und Heizeinrichtungen versehen sein, um die gewünschten Arbeitstemperaturen einzustellen. Die aus der Leitung 20 kommende Flüssigkeit wird mit der im Behälter 21 enthaltenen Kreislaufflüssigkeit vermischt.

Aus dem Behälter 21 wird das Ultrafiltrations-Retentat zusammen mit der aus dem Kreislauf B eingeführten Flüssigkeit über die Leitung 22, mittels einer Pumpe 23 und über ein gegebenenfalls zuschaltbares Vorfilter 24 einer Ultrafiltrationseinheit 25 zugeführt. In der Ultrafiltrationseinheit 25 wird laufend Permeat entzogen. Das Retentat wird über die Leitung 26 zurück in den Behälter 14 geführt.

Erfindungsgemäß wird der Ultrafiltrationskreislauf C durch den Behälter 21, die Leitung 22 mit Pumpe 23 und gegebenenfalls zuschaltbarem Vorfilter 24, die Ultrafiltrationseinheit 25 und die Leitung 26 gebildet. Beim erfindungsgemäßen Verfahren wird der Kreislauf C in Kombination mit einer Steuerung, die die Zufuhr von Retentat aus dem Kreislauf B regelt, so gesteuert, daß die umlaufende Flüssigkeit C bei einem Festkörpergehalt gehalten wird, der bei einem annähernd konstanten Wert im Bereich von 35 Gew.% bis zu dem Festkörpergehalt liegt, der sich bei Spritzviskosität des überzugsmittels ergibt.

Aus der Ultrafiltrationseinheit 25 erhaltenes Permeat wird über die Leitung 27 abgezogen und über den Boden 3 der Spritzkabine 1 in den Kreislauf A zurückgeführt.

Die Ultrafiltration kann so betrieben werden, daß die Permeatausbeute nur einen geringen Anteil des durch die Filter fließenden Volumens beträgt. Auf diese Weise unterscheidet sich das Retentat in seiner Zusammensetzung praktisch nicht von den in den Kreisläufen B und C umlaufenden Kreislaufflüssigkeiten, insbesondere dann, wenn das Volumen der Behälter 13 und 21 sehr groß ist im Vergleich zum Durchflußvolumen der Ultrafiltrationseinheiten. Durch Ausnutzung dieses Effekts erlaubt das erfindungsgemäße Verfahren die Aufkonzentration des Oversprays aus Kreislauf A bei praktisch gleichbleibender Zusammensetzung und gleichem Festkörpergehalt der Kreisläufe B und C.

Von der Leitung 26, die Ultrafiltrations-Retentat aus der Ultrafiltrationseinheit 25 in den Behälter 21 zurückführt, zweigt eine zuschaltbare Leitung 28 ab, die einen Teil des bei der Ultrafiltration erhaltenen Konzentrats beispielsweise zu einer Nachfüllvorrichtung führt. Der Nachfüllvorrichtung wird Nachfüllkonzentrat zugeführt, das durch Vermischen mit dem Ultrafiltrations-Retentat zu dem wäßrigen überzugsmittel verdünnt wird, das im Spritzaggregat 6 in der Spritzkabine 1 zur Spritzapplikation verwendet werden kann. Die Nachfüllvorrichtung kann somit mittels einer Leitung, gegebenenfalls über einen Vorratsbehälter, mit dem Spritzaggregat 6 verbunden sein. In der Nachfüllvorrichtung können auch weitere Bestandteile zugemischt werden, die während der Durchführung des Verfahrens den Kreisläufen A, B oder C entzogen wurden, wie beispielsweise Wasser oder flüchtige Anteile.

Das erfindungsgemäße Verfahren kann mit wasserverdünnbaren überzugsmitteln durchgeführt werden, wie sie dem Fachmann geläufig und im Handel erhältlich sind. Geeignet sind beispielsweise wasserverdünnbare Lacke, wie sie beispielsweise für die Auto- bzw. Kraftfahrzeugserienlackierung verwendet werden. Geeignet sind jedoch auch wasserverdünnbare Füller, wie sie beispielsweise ebenfalls in der Autoserienlackierung eingesetzt werden.

Das erfindungsgemäße Verfahren wird bevorzugt an wäßrigen überzugsmitteln durchgeführt, die einen Festkörpergehalt von 35 bis 80 Gew.% aufweisen; bevorzugt wird dabei so gearbeitet, daß dieser Festkörpergehalt gleich oder größer ist als der Festkörpergehalt der im Ultrafiltrationskreislauf C umlaufenden Flüssigkeit.

Die Bestimmung der Festkörpergehalte von wäßrigem überzugsmittel sowie in den einzelnen Kreisläufen kann beispielsweise nach DIN 53216 durchgeführt werden. Dabei ist es bevorzugt, nach der Einwaage der zu bestimmenden Probe auf einer Metallschale mit flachem Boden zuerst etwa eine halbe Stunde bei etwa 95 C vorzuwärmen. Dadurch wird ein Teil des Wassers verdampft und kann dann nicht mehr zu falschen Ergebnissen durch Verspritzen führen.

Die wasserverdünnbaren überzugsmittel, beispielsweise wasserverdünnbaren Lacke und Füller, können gegebenenfalls Pigmente und/oder Füllstoffe enthalten, sie können jedoch auch als Klarlacke formuliert sein. Sie können organische Lösemittel enthalten oder frei von organischen Lösemitteln sein.

Die für das erfindungsgemäß Verfahren einsetzbaren wasserverdünnbaren überzugsmittel können, wie erwähnt, transparent oder pigmentiert sein. Sie können gegebenenfalls Füllstoffe, Additive, Koaleszenzmittel, flüchtige organische Flüssigkeiten und sonstige übliche Lackrohstoffe enthalten. Sie können physikalisch oder chemisch trocknend sein. Es kann sich um selbstvernetzende oder fremdvernetzende Systeme, beispielsweise für Einbrennlacke handeln.

Wasserverdünnbare Lacke, die beim erfindungsgemäßen Verfahren eingesetzt werden können, sind z. B. wäßrige Dispersionen. Es kann sich dabei um Systeme mit feiner Verteilung von Polymeren bzw. Kunstharzen im Wasser auf Basis von Homopolymeren oder Copolymeren von Styrol, Vinylchlorid, Vinylacetat, Maleinsäureanhydrid, Maleinsäureester, Maleinsäurehalbester, Vinylpropionat, (Meth)acrylsäure und deren Ester, Amide und Nitrile handeln. Beispiele für derartige wäßrige überzugsmittel findet man in dem Lehrbuch der Lacke und Beschichtungen, Herausgeber: Dr. Hans Kittel, Bd. I, Teil 3, Verlag W. A. Colomb in der H. Heenemann GmbH, 1974, Seiten 920 bis 1001 und in Lackkunstharze von Hans Wagner und Hans Friedrich Sarx, Carl Hanser Verlag, München, 1971, Seiten 207 bis 242, sowie in A Manual of Resins for Surface Coatings, SITA Technology, London, 1987, Volume II, Seiten 249 bis 296.

Weitere Beispiele sind wasserverdünnbare Lacke, die Emulsionen von Polymeren bzw. Kunststoffen darstellen. Sie können beispielsweise in Lösemitteln gelöste oder lösemittelfreie Bindemittel, gegebenenfalls mit Vernetzungsmitteln, emulgiert in Wasser, enthalten. Emulsionen mit besonders feiner Verteilung der Bindemitteltröpfchen werden als Mikroemulsionen bezeichnet. Die große Gruppe der wasserverdünnbaren Lacke, die mit sogenannten wasserlöslichen Polymeren bzw. Kunstharzen hergestellt werden und als weitere Beispiele für das erfindungsgemäße Verfahren verwendet werden können, enthalten Bindemittel, welche saure oder basische Gruppen tragen, z. B. Carbonsäuregruppen, Carbonsäureanhydridgruppen, Sulfonsäuregruppen, primäre, sekundäre, tertiäre Aminogruppen, Sulfoniumgruppen, Phosphoniumgruppen. Durch Neutralisation oder Teilneutralisation der Gruppen mit basischen Verbindungen, z. B. mit Amin, Alkanolamin, Ammoniak, Natriumhydroxid oder Kaliumhydroxid, oder mit sauren Verbindungen, z. B. Ameisensäure, Essigsäure, Milchsäure, Alkylphosphorsäure, Kohlensäure, werden die Polymeren bzw. Kunstharze in eine wasserverdünnbare Form gebracht. Die Bindemittelbasis besteht z. B. aus einem oder mehreren Bindemitteln der Gruppe der Polyurethanharze, Polyesterharze, Poly(meth)acrylatharze, Epoxidharze, Epoxidharzester, fette Öle (z. B. Leinöl) synthetische Öle (z. B. Polybutadienöl).

Beispiele für sogenannte wasserlösliche Lacke sind in Lehrbuch der Lacke und Beschichtungen, Herausgeber: Dr. Hans Kittel, Bd. I, Teil 3, Verlag W. A. Colomb in der H. Heenemann GmbH, 1974, Seiten 879-919 und A Manual of Resins for Surface Coatings, SITA Technology London, 1987, Volume III, Seiten 169-280, sowie EP-A-0 032 554, EP-A-0 309 901 zu finden.

Mischungen von wäßrigen Dispersionen mit sogenannten wasserlöslichen Polymeren bzw. Kunstharzen, die als Hybrid-Systeme bekannt sind, eignen sich ebenfalls für das erfindungsgemäße Verfahren.

Als Vernetzungsmittel für die wäßrigen überzugsmittel kommen beispielsweise Harnstoffharze, Triazinharze (wie Melaminharze und Benzoguanaminharze), Phenolharze, blockierte Polyisocyanate (wie blockierte Diisocyanate, Triisocyanate, Isocyanurate, Diurete, Prepolymere von Isocyanaten) und Mischungen von verschiedenen Vernetzungsmitteln in Frage.

Das erfindungsgemäße Verfahren eignet sich bevorzugt für wasserverdünnbare Lacke, die z. B. in DE-A-36 28 124, DE-A-36 28 125, DE-A-37 39 332, DE-A-38 05 629, DE-A-38 38 179, EP-A-0 038 127, EP-A-0 089 497, EP-A-0 123 939, EP-A-0 158 099, EP-A-0 226 171, EP-A-0 238 037, EP-A-0 234 361, EP-A-0 298 148, EP-A-0 287 144, EP-A-0 300 612, EP-A-0 315 702, EP-A-0 346 886, EP-A-0 399 427, US-A-4,822,685, US-A-4,794,147 und WO 87/05305 beschrieben und in Form der Spritzapplikation (manuell, automatisch oder elektrostatisch) für die Autoserienlackierung verwendet werden, und insbesondere bevorzugt für wasserverdünnbare Füller (Hydrofüller), die z. B. in EP-A-0 015 035, EP-A-0 269 828, EP-A-0 272 524, WO 89/10387 und Wasserklarlacke in der Autoserienlackierung, die z. B. in EP-A-0 266 152 beschrieben werden.

Das erfindungsgemäße Verfahren läßt sich bevorzugt auch auf wasserverdünnbare Steinschlagschutzlacke anwenden, wie sie beispielsweise in DE-A-38 05 629 beschrieben werden. Solche Steinschlagschutzlacke können direkt auf Metallsubstrate oder auf mit üblichen Grundierungsmitteln, z. B. Elektrotauchlack, vorgrundierte Metallsubstrate appliziert und gegebenenfalls mit Füller überlackiert werden. Sie verbessern die Steinschlagfestigkeit von Mehrschichtlackierungen.

Durch die vorliegende Erfindung wird ein Verfahren bereitgestellt, das die problemlose praktische Wiederverwertung von Overspray ermöglicht, das bei der Spritzapplikation wäßriger überzugsmittel anfällt. Das erfindungsgemäße Verfahren ist besonders geeignet zur Anwendung auf die manuelle, automatische oder elektrostatische Spritzapplikation, wie sie insbesondere bei der Autoserienlackierung durchgeführt wird. Es kann daher beispielsweise auf wasserverdünnbare Lacke für die Autoserienlackierung angewendet werden, wie pigmenthaltige Unilacke und effektpigmenthaltige Lacke, z. B. Metalliclacke, und bevorzugt wird es auf wasserverdünnbare Füller (Hydrofüller) sowie auf wasserverdünnbare Klarlacke für die Autoserienlackierung angewendet. Es ermöglicht eine umweltschonende praktisch 100 %ige Wiederverwendung von Overspray.

## Patentansprüche

1. Verfahren zur Rückgewinnung des Oversprays von wäßrigen überzugsmitteln beim Spritzauftrag in Spritzkabinen, bei dem das Overspray in einer wäßrigen Auswaschflüssigkeit aufgefangen wird, die kontinuierlich in einem Kreislauf (A) in die Spritzkabine zurückgeführt wird, wobei ein Teil der Overspray enthaltenden Auswaschflüssigkeit aus dem Kreislauf (A) einem Ultrafiltrationskreislauf (B) zugeführt wird, und wobei im Ultrafiltrationskreislauf (B) Permeat entzogen und zur Ergänzung der Auswaschflüssigkeit in den Kreislauf (A) zurückgeführt wird, dadurch gekennzeichnet, daß das Verfahren kontinuierlich durchgeführt wird, daß die Auswaschflüssigkeit im Kreislauf (A) bei einem annähernd konstanten Festkörpergehalt im Bereich von 1-1,5 Gew.% gehalten wird, daß die im Ultrafiltrationskreislauf (B) umlaufende Flüssigkeit durch Entzug von Permeat bei einem annähernd konstanten Festkörpergehalt im Bereich von 8-15 Gew.% gehalten wird, wobei ein Teil der umlaufenden Flüssigkeit aus dem Ultrafiltrationskreislauf (B) einem weiteren Ultrafiltrationskreislauf (C) zugeführt wird, in dem die umlaufende Flüssigkeit durch Entzug von Permeat bei einem annähernd konstanten Festkörpergehalt im Bereich von 35 Gew.% bis zu dem Festkörpergehalt, der sich bei Spritzviskosität des wäßrigen überzugsmittels ergibt, gehalten wird, wobei das Permeat aus dem Kreislauf (C) ebenfalls zur Ergänzung der Auswaschflüssigkeit in den Kreislauf (A) zurückgeführt wird und zumindest ein Teil der im Ultrafiltrationskreislauf (C) umlaufenden Flüssigkeit als wäßriges überzugsmittel zum Spritzauftrag in der Spritzkabine oder zu dessen Aufbereitung verwendet wird.

2. Verfahren nach Anspruch 1, dadurch gekennzeichnet, daß die Flüssigkeitsvolumina im Kreislauf (A), im Kreislauf (B) und im Kreislauf (C) jeweils konstant gehalten werden.

3. Verfahren nach Anspruch 1 oder 2, dadurch gekennzeichnet, daß mit einem wäßrigen überzugsmittel gearbeitet wird, das einen Festkörpergehalt von 35 bis 80 Gew.% aufweist, wobei dieser Festkörpergehalt jeweils gleich oder größer ist als der Festkörpergehalt der im Ultrafiltrationskreislauf (C) umlaufenden Flüssigkeit.

4. Verfahren nach Anspruch 1, 2 oder 3, dadurch gekennzeichnet, daß ein Teil der im Ultrafiltrationskreislauf (C) umlaufenden Flüssigkeit mit frischem Nachfüllkonzentrat des wäßrigen überzugsmittels und gegebenenfalls Wasser und/oder anderen überzugsmittelbestandteilen gegebenenfalls unter Zuhilfenahme von Mischvorrichtungen unter Bildung des wäßrigen überzugsmittels vermischt wird, das zum Spritzauftrag in die Soritzkabine geführt wird.

5. Verfahren nach Anspruch 1, 2 oder 3, dadurch gekennzeichnet, daß im Ultrafiltrationskreislauf (C) mit dem spritzfertigen überzugsmittel als umlaufende Flüssigkeit gearbeitet wird.

6. Verfahren nach Anspruch 5, dadurch gekennzeichnet, daß dem Ultrafiltrationskreislauf (C) das Nachfüllkonzentrat des wäßrigen überzugsmittels und gegebenenfalls Wasser und/oder andere überzugsmittelbestandteile gegebenenfalls unter Zuhilfenahme von Mischvorrichtungen zudosiert werden und das für die Spritzapplikation benötigte überzugsmittel aus dem Ultrafiltrationskreislauf (C) gezogen wird.

7. Verfahren nach einem der vorhergehenden Ansprüche, dadurch gekennzeichnet, daß es mit wäßrigen pigmentierten oder transparenten Lacken durchgeführt wird.

8. Verfahren nach einem der Ansprüche 1 bis 6, dadurch gekennzeichnet, daß es mit wäßrigen Füllern durchgeführt wird.

9. Verfahren nach einem der vorhergehenden Ansprüche, dadurch gekennzeichnet, daß es mit wäßrigen überzugsmitteln durchgeführt wird, die für die Autoserienlackierung bzw. Kraftfahrzeuglackierung verwendet werden.

## Claims

1. A process for recovering the overspray from aqueous coating media during spray application in spray booths, in which the overspray is captured in an aqueous scrubbing liquid which is continuously recycled to the spray booth in a circuit (A), wherein part of the scrubbing liquid containing overspray is fed from circuit (A) to an ultrafiltration circuit (B), and wherein permeate is drawn off in the ultrafiltration circuit (B) and recycled to augment the scrubbing liquid in circuit (A), characterised in that the process is carried out continuously, that the scrubbing liquid in circuit (A) is maintained at an approximately constant solids content in the region from 1-1.5 % by weight, that the liquid circulating in the ultrafiltration circuit (B) is maintained at an approximately constant solids content in the range from 8-15 % by weight by drawing off permeate, wherein part of the circulating liquid is fed from the ultrafiltration circuit (B) to a further ultrafiltration circuit (C) in which the circulating liquid is maintained, by drawing off permeate, at an approximately constant solids content in the range from 35 % by weight up to the solids content which occurs at the spray viscosity of the aqueous coating medium, wherein the permeate from circuit (C) is likewise recycled for augmenting the scrubbing liquid in circuit (A) and at least part of the liquid circulating in ultrafiltration circuit (C) is used for spray application in the spray booth or for the preparation thereof.

2. A process according to claim 1, characterised in that the liquid volume in circuit (A), in circuit (B) and in circuit (C) is maintained constant in each case.

3. A process according to claim 1 or 2, characterised in that an aqueous coating medium is employed which has a solids content of 35 to 80 % by weight, wherein this solids content is in each case greater than or equal to the solids content of the liquid circulating in ultrafiltration circuit (C).

4. A process according to claim 1, 2 or 3, characterised in that part of the liquid circulating in ultrafiltration circuit (C) is mixed with fresh feed concentrate of the aqueous coating medium and optionally with water and/or other coating medium constituents, optionally with the aid of mixer devices, with the formation of the aqueous coating medium which is fed into the spray booth for spray application.

5. A process according to claim 1, 2 or 3, characterised in that the ready-to-spray coating medium is employed as the circulating liquid in ultrafiltration circuit (C).

6. A process according to claim 5, characterised in that feed concentrate of the aqueous coating medium, and optionally water and/or other coating medium constituents are metered into ultrafiltration circuit (C), optionally with the aid of mixer devices, and the coating medium required for spray application is drawn off from ultrafiltration circuit (C).

7. A process according to any one of the preceding claims, characterised in that it is carried out with aqueous, pigmented or transparent lacquers.

8. A process according to any one of claims 1 to 6, characterised in that it is carried out with aqueous fillers.

9. A process according to any one of the preceding claims, characterised in that it is carried out with aqueous coating media which are used for the mass production spray painting of automobiles or motor vehicles.

## Revendications

1. Procédé destiné à recycler l'excédent de compositions de revêtement aqueuses pulvérisées lors de l'application au pistolet dans des cabines de peinture, dans lequel l'excédent pulvérisé est capté par un liquide de lavage aqueux qui est amené en continu dans la cabine de peinture dans une boucle de circulation (A), une partie du liquide de lavage contenant l'excédent pulvérisé est amenée depuis la boucle de circulation (A) vers un circuit d'ultrafiltration (B), un perméat étant extrait du liquide circulant dans le circuit (a) et reconduit dans la boucle de circulation (A) pour compléter le liquide de lavage, caractérisé en ce que le processus est exécuté en continu, que la teneur en solides dans le liquide de lavage de la boucle de circulation (A) est maintenue à une valeur pratiquement constante comprise entre 1 et 1,5 % en poids, que la teneur en solides du liquide circulant dans le circuit d'ultrafiltration (B) est maintenue, par le retrait du perméat, à une valeur pratiquement constante comprise entre 8 et 15 % en poids, une partie du liquide circulant dans le circuit d'ultrafiltration (B) étant amenée dans un autre circuit d'ultrafiltration (C), dans lequel la teneur en solides du liquide, par le retrait du perméat, est maintenue à une valeur pratiquement constante comprise entre 35 % en poids et la valeur de la teneur en solides, laquelle est obtenue par la viscosité de la composition de revêtement aqueuse à pulvériser, le perméat extrait étant également reconduit du circuit (C) vers le circuit (A) pour compléter le liquide de lavage, et au moins une partie du liquide circulant dans le circuit d'ultrafiltration (C) étant réutilisée en tant que composition de revêtement aqueuse pour l'application au pistolet dans la cabine de peinture ou pour la préparation de celle-ci.

2. Procédé selon la revendication 1, caractérisé en ce que les volumes des liquides dans le circuit (A), le circuit (B) et le circuit (C) sont toujours maintenus constants.

3. Procédé selon la revendication 1 ou 2, caractérisé en ce qu'on utilise une composition de revêtement aqueuse dont la teneur en solides est comprise entre 35 et 80 % en poids, cette teneur en solides étant toujours égale ou supérieure à la teneur en solides du liquide circulant dans le circuit d'ultrafiltration (C).

4. Procédé selon la revendication 1, 2 ou 3, caractérisé en ce qu'une partie du liquide circulant dans le circuit d'ultrafiltration (C) est mélangée à un concentrat frais de redosage de la composition de revêtement aqueuse et, le cas échéant, à l'eau et/ou à d'autres composants de la composition de revêtement, le cas échéant, par l'intermédiaire d'un dispositif de mélange, pour former la composition de revêtement aqueuse qui sera amenée vers le pistolet de pulvérisation de la cabine de peinture.

5. Procédé selon la revendication 1, 2 ou 3, caractérisé en ce qu'on utilise la composition de revêtement prête à être appliquée qui circule comme un liquide dans le circuit d'ultrafiltration (C).

6. Procédé selon la revendication 5, caractérisé en ce que l'on ajoute par dosage dans le circuit d'ultrafiltration (C) le concentrat de redosage de la composition de revêtement aqueuse et, le cas échéant, l'eau et/ou d'autres composants de la composition de revêtement par l'intermédiaire d'un dispositif de mélange et en ce que la composition de revêtement utilisée pour l'application au pistolet est extraite du circuit d'ultrafiltration (C).

7. Procédé selon l'une quelconque des revendications précédentes, caractérisé en ce que le procédé est exécuté avec des vernis pigmentés aqueux ou des vernis transparents aqueux.

8. Procédé selon l'une quelconque des revendications 1 à 6, caractérisé en ce que le procédé est exécuté avec des produits de coupage aqueux.

9. Procédé selon l'une quelconque des revendications précédentes, caractérisé en ce que le procédé est exécuté avec des compositions de revêtement aqueuses qui sont utilisées pour la technique de peinture en série dans l'industrie automobile.
